# EUROPÄISCHE PATENTSCHRIFT

(11) **EP 3 380 416 B1**
(45) Veröffentlichungstag und Bekanntmachung des Hinweises auf die Patenterteilung: **20.07.2022**
(21) Anmeldenummer: 16805269.4
(22) Anmeldetag: 23.11.2016
(51) Int. Cl.: B65G 19/02, B65G 47/61

(54) **TRANSPORTTASCHE SOWIE VERFAHREN ZUM BEFÜLLEN UND ENTLEEREN EINER SOLCHEN TRANSPORTTASCHE**
TRANSPORT BAG AND METHOD FOR FILLING AND EMPTYING A TRANSPORT BAG OF THIS TYPE
SAC DE TRANSPORT ET PROCÉDÉ DE REMPLISSAGE ET DE VIDAGE D'UN TEL SAC DE TRANSPORT

(30) Priorität: 25.11.2015 CH 17212015; 27.10.2016 CH 14382016
(43) Veröffentlichungstag der Anmeldung: 03.10.2018
(73) Patentinhaber: Ferag AG, 8340 Hinwil (CH)
(72) Erfinder: KELLER, Martin, 8488 Turbenthal (CH); KÄLIN, Erich, 8640 Rapperswil (CH)
(74) Vertreter: Rentsch Partner AG
(86) Internationale Anmeldenummer: PCT/CH2016/000146
(87) Internationale Veröffentlichungsnummer: WO 2017/088076

(56) Entgegenhaltungen:
- DE-A1- 10 354 419
- DE-A1-102004 018 569
- DE-A1-102012 018 925
- DE-A1-102012 108 757
- DE-B- 1 116 156
- US-A- 3 357 539

## Beschreibung

### TECHNISCHES GEBIET

Die vorliegende Erfindung bezieht sich auf das Gebiet der Fördertechnik. Sie betrifft eine Transporttasche für den hängenden Transport eines Transportgutes gemäss dem Oberbegriff des Anspruchs 1.

Sie betrifft weiterhin ein Verfahren zum Befüllen sowie zum Entleeren einer solchen Transporttasche.

### STAND DER TECHNIK

Hängeförderanlagen, an denen in angehängten Transporttaschen Transportgüter gefördert werden, sind seit langem aus dem Stand der Technik bekannt.

Druckschrift DE 10 2012 108 757 A1 beschreibt eine Tragetasche für eine Hängefördervorrichtung für den hängenden Transport von Objekten, welche einen Halterahmen, einen Taschenbeutel, der am Halterahmen hängt und von dem zu transportierende Objekte aufnehmbar sind, und ein Aufhängeelement aufweist, welches mit dem Halterahmen verbunden ist und mittels dessen die Tragetasche an die Hängefördervorrichtung anhängbar ist, um von der Hängefördervorrichtung hängend transportiert zu werden.

Der Taschenbeutel weist einen ersten und einen zweiten Beutelabschnitt auf, die jeweils einen mit dem Halterahmen verbundenen, ersten Beutelendabschnitt und einen vom Halterahmen abgewandten, zweiten Beutelendabschnitt aufweisen, wobei die zweiten Beutelendabschnitte über einen Gelenkmechanismus miteinander verbunden sind, welcher in eine Entladestellung bringbar ist, in welcher die zweiten Beutelendabschnitte in einem Abstand voneinander angeordnet sind, sodass der Taschenbeutel zur Abgabe von Objekten mit einer zwischen den zweiten Beutelendabschnitten gebildeten Auslassöffnung versehen ist, und welcher in eine Beladestellung bringbar ist, in welcher die zweiten Beutelendabschnitte zueinander benachbart angeordnet sind, sodass die Auslassöffnung geschlossen ist und der Taschenbeutel Objekte aufnehmen kann.

Druckschrift DE 10 2004 018 569 A1 offenbart eine Sammeleinrichtung zum Aufnehmen von Objekten, insbesondere von Kleidungsstücken, beim sortierenden Sammeln der Objekte, mit einer Sammeltasche, die im Wesentlichen ein mit einem in eine Fördervorrichtung integrierbaren Mitnahmeelement versehenes Rahmengestell und einen am Rahmengestell hängenden Taschenbeutel aufweist, wobei das Mitnahmeelement und das Rahmengestell relativ zueinander um eine quer zur Förderrichtung liegende Achse schwenkbar sind, und wobei bei horizontaler Anordnung des Rahmengestells der Taschenbeutel geöffnet und bei vertikaler Anordnung des Rahmengestells der Taschenbeutel zusammengefallen und im Wesentlichen geschlossen ist.

Druckschrift DE 103 54 419 A1 offenbart eine Hängefördereinrichtung zum Transportieren von Fördergut, insbesondere Kleidungsstücken, mit einer Mehrzahl von Fördergutträgern, welche mittels eines Hakens an einer Führungsschiene angehängt oder anhängbar sind und an dieser entlang einer Förderstrecke transportierbar sind, wobei mindestens einer der Fördergutträger mindestens eine Tasche zur Aufnahme von Fördergut aufweist, und wobei die Tasche wenigstens ein Taschenfach aufweist, welches begrenzt wird von einer Vorderwand und einer Rückwand, die relativ zueinander verstellbar sind, um das Taschenfach zwischen einer geschlossenen Stellung und mindestens einer geöffneten Stellung schrittweise oder kontinuierlich einzustellen, wobei in der geschlossenen Stellung die Vorderwand der Rückwand weitestgehend angenähert ist und wobei in der mindestens einen geöffneten Stellung die Vorderwand und die Rückwand im Vergleich mit der geschlossenen Stellung voneinander entfernt oder ggf. voneinander abgespreizt sind.

Die Druckschrift DE 10 2012 018 925 A1 offenbart eine Transporttasche nach dem Oberbegriff des Anspruchs 1 und eine Taschen-Hängeförderanlage mit einem Hängeförderer zum Transportieren der Taschen entlang einer Führungsschiene stromabwärts in einer Förderrichtung, wobei die Taschen in einer Transportstellung lotrecht unterhalb der Führungsschiene hängen und wobei die Taschen in einer Beladestellung im Wesentlichen horizontal ausgerichtet sind

Weiterhin ist eine Beladestation vorgesehen, die eine Auslenkeinrichtung aufweist, wobei die Auslenkeinrichtung ein stromaufwärts gelegenes Ende und ein stromabwärts gelegenes Ende aufweist und unterhalb der Führungsschiene des Hängeförderers angeordnet ist, wobei die Taschen während des Transports in der Förderrichtung in Anlage mit der Auslenkeinrichtung kommen, um die Taschen zumindest anfänglich während eines fortgesetzten Transports in der Förderrichtung aus der lotrechten Transportstellung in die im Wesentlichen horizontale Beladestellung zu drehen.

Die Tasche weist eine Aufhängeeinrichtung zum schwenkbaren Koppeln der Tasche an die Führungsschiene des Hängeförderers auf, sowie eine Rückseite, die in der lotrechten Transportstellung einen oberen Abschnitt und einen unteren Abschnitt aufweist, wobei sich der untere Abschnitt in einer Längsrichtung der Rückseite an den oberen Abschnitt anschliesst, sowie einen Deckel, eine Vorderseite und einen Boden, wobei die Rückseite in der Querrichtung jeweils breiter als der Deckel, die Vorderseite und der Boden ausgebildet ist, so dass die Rückseite zumindest einen, seitlich in Bezug auf die Vorderseite überstehenden, Flügelbereich aufweist, der während eines Transports der Tasche durch die Beladestation zum Drehen der Tasche gegen das mindestens eine Schwenkelement anstösst, und der in der Beladestellung auf der Auslenkeinrichtung aufliegt.

Wichtige Gesichtspunkte beim Einsatz derartigerTransporttaschen sind eine möglichst einfache und reibungslose Befüllung und Entleerung, die in den fortlaufenden Förderprozess gut integrierbar, wenig störungsanfällig und für unterschiedliche Transportgüter flexibel zu handhaben sind. Grundlage dafür ist auch die Ausgestaltung der Taschen selbst.

### DARSTELLUNG DER ERFINDUNG

Es ist daher eine Aufgabe der Erfindung, eine Transporttasche zu schaffen, welche sich im Zusammenhang mit Hängeförderern besonders einfach und sicher befüllen und entleeren lässt.

Es ist weiterhin eine Aufgabe der Erfindung, im Zusammenhang mit einer solchen Tasche ein Verfahren zum Befüllen sowie ein Verfahren zum Entleeren einer solchen Tasche anzugeben.

Die Aufgaben werden durch die Merkmale der Ansprüche 1, 10 und 14 gelöst.

Die Erfindung geht aus von einer Transporttasche für den hängenden Transport eines Transportgutes mittels einer sich in einer Transportrichtung erstreckenden Transportvorrichtung, welche Transporttasche eine quer zur Transportrichtung ausgerichtete Rückwand und eine quer zur Transportrichtung ausgerichtete Vorderwand aufweist, die an einem oberen Taschenabschluss und einem unteren Taschenabschluss untereinander beweglich verbunden sind, derart, dass die Vorderwand relativ zur Rückwand zwischen einer Füllposition, in welcher sie zur Rückwand einen ersten Abstand hat, und einer Leerposition, in welcher sie zur Rückwand einen zweiten Abstand hat, welcher kleiner ist als der erste Abstand, und welche Transporttasche mittels eines an der Rückwand oben angebrachten Verbindungsmittels mit der Transportvorrichtung hängend verbindbar ist.

Sie ist durch die Merkmale des kennzeichnenden Teils des Anspruchs 1 gekennzeichnet.

Erfindungsgemäß sind die Führungselemente lokalisierte Elemente und können Nocken, Stifte oder anderweitig lokalisierte Elemente sein.

Insbesondere sind die ersten Führungselemente als erste Rollelemente ausgebildet.

Dabei können die Achsen der ersten Rollelemente quer zur Transportrichtung orientiert sein.

Gemäss einer Ausgestaltung der Erfindung kann die Rückwand formstabil ausgebildet sein.

Gleichzeitig kann die Transporttasche aber auch rahmenlos ausgebildet sein.

Eine besonders einfache und wirkungsvolle Lösung für die Bildung der Transporttasche ergibt sich in diesem Zusammenhang, wenn die Rückwand und Vorderwand Abschnitte einer einstückigen Hohlkammerplatte, die vorzugsweise aus Kunststoff, insbesondere aus Polypropylen, besteht, sind, welche zur Ausbildung von Rückwand, Vorderwand und dazwischen liegendem Boden zweimal in geeignetem Abstand quer zur Längsrichtung der Hohlkammern geknickt ist, derart, dass bei der hängenden Transporttasche die Hohlkammern in der Rückwand und Vorwand vertikal verlaufen. An den Knickstellen sind dann die Wände und der Boden der Tasche verschwenkbar miteinander verbunden. Die Hohlkammern der Hohlkammerplatte verleihen den Wänden und dem Boden die notwendige Stabilität.

Die Rückwand kann aber auch einen Rahmen, der vorzugsweise formstabil ist, aufweisen.

Eine Ausgestaltung der erfindungsgemässen Transporttasche ist dadurch gekennzeichnet, dass zur beweglichen Verbindung zwischen der Vorderwand und der Rückwand am oberen Taschenabschluss ein formstabiler Bügel vorgesehen ist, welcher sowohl an der Vorderwand als auch an der Rückwand verschwenkbar gelagert ist. Der Bügel kann als geschlossener aber auch als offener Bügel ausgebildet sein.

Eine andere Ausgestaltung der erfindungsgemässen Transporttasche ist dadurch gekennzeichnet, dass zur beweglichen Verbindung zwischen der Vorderwand und der Rückwand am unteren Taschenabschluss ein formstabiler unterer Rahmen oder Bügel und/oder Boden vorgesehen ist, welche sowohl an der Vorderwand als auch an der Rückwand verschwenkbar gelagert sind.

Eine weitere Ausgestaltung der erfindungsgemässen Transporttasche ist dadurch gekennzeichnet, dass die Vorderwand im Bereich des oberen Taschenabschlusses seitlich angeordnete zweite Rollelemente zum Führen der und/oder Einwirken auf die Transporttasche aufweist.

Insbesondere können die Achsen der zweiten Rollelemente quer zur Transportrichtung orientiert sein.

Eine wieder andere Ausgestaltung der erfindungsgemässen Transporttasche ist dadurch gekennzeichnet, dass in der Vorderwand mindestens eine Eingriffsöffnung vorgesehen ist, durch welche hindurch ein Zugriff auf den im Inneren der Transporttasche befindlichen Transportraum ermöglicht wird. In diesem Fall kann ein an der Transporttasche angebrachter Bügel als offener Bügel ausgebildet sein.

Eine weitere Ausgestaltung der erfindungsgemässen Transporttasche ist dadurch gekennzeichnet, dass die Transporttasche an den Seiten offen ausgebildet ist.

Die Transporttasche kann aber auch an den Seiten zumindest teilweise geschlossen ausgebildet sein.

Das erfindungsgemässe Verfahren zum Befüllen der Transporttasche nach der Erfindung ist dadurch gekennzeichnet, dass die an der Transportvorrichtung hängende Transporttasche zum Öffnen von der frei hängenden vertikalen Lage durch Verschwenken der Rückwand zum Erreichen einer Einfülllage so weit in Richtung auf eine horizontale Lage, bei der sich die Rückwand oberhalb der Vorderwand befindet, bewegt wird, dass der sich einstellende Abstand zwischen Rückwand und Vorderwand für das Einfüllen eines Transportgutes ausreichend gross ist.

Eine andere Ausgestaltung des erfindungsgemässen Verfahrens ist dadurch gekennzeichnet, dass zum Verschwenken der Transporttasche die ersten Führungselemente bzw. Rollelemente der Rückwand auf einer Kulissenführung relativ zur Transportvorrichtung nach oben verfahren werden.

Zum Verfahren der ersten Führungselemente bzw. Rollelemente auf der Kulissenführung kann dabei die Transporttasche an der Transportvorrichtung hängend in Transportrichtung weiterbewegt werden.

Insbesondere können die ersten Führungselemente bzw. Rollelemente beim Erreichen der für das Füllen der Transporttasche vorgesehenen Einfülllage einrastend in eine Rastvertiefung an der Kulissenführung einfahren.

Wenn die Vorderwand im Bereich des oberen Taschenabschlusses seitlich angeordnete zweite Rollelemente zur Führung der Transporttasche aufweist, deren Achsen insbesondere quer zur Transportrichtung orientiert sind, kann dabei beim Erreichen der für das Füllen der Transporttasche vorgesehenen Lage die Vorderwand in ihrer Position mittels der zweiten Rollelemente fixiert werden.

Eine weitere Ausgestaltung des erfindungsgemässen Verfahrens ist dadurch gekennzeichnet, dass das Transportgut in die in der Einfülllage befindliche Transporttasche eingeführt wird.

Insbesondere können Mittel zum Einführen des Transportgutes in die Transporttasche vorgesehen sein.

Wenn in der Vorderwand der Transporttasche mindestens eine Eingriffsöffnung vorgesehen ist, können auch andere Mittel zum Einführen des Transportgutes in die Transporttasche vorgesehen sein.

Insbesondere kann in der Vorderwand der Transporttasche mindestens eine Eingriffsöffnung vorgesehen sein, durch welche hindurch ein Zugriff auf den im Inneren der Transporttasche befindlichen Transportraum ermöglicht wird, wobei die Mittel zum Einführen des Transportgutes Rollenbahnen umfassen und zum leichteren Einführen des Transportgutes in die Transporttasche die Transporttasche derart auf die Rollenbahnen abgesenkt wird, dass diese mit ihren Rollen durch die mindestens eine Eingriffsöffnung in den Transportraum hineinragen.

Das erfindungsgemässe Verfahren zum Entleeren der Transporttasche nach der Erfindung ist dadurch gekennzeichnet, dass die an der Transportvorrichtung hängende Transporttasche von der frei hängenden vertikalen Lage durch Verschwenken der Rückwand zum Erreichen einer Entleerungslage so weit in Richtung auf eine horizontale Lage oder darüber hinaus, bei der sich die Rückwand oberhalb der Vorderwand befindet, bewegt wird, dass das in der Transporttasche befindliche Transportgut aus der Transporttasche herausbefördert werden kann.

Eine Ausgestaltung des erfindungsgemässen Verfahrens ist dadurch gekennzeichnet, dass zum Verschwenken der Transporttasche die ersten Führungselemente bzw. Rollelemente der Rückwand auf einer Kulissenführung relativ zur Transportvorrichtung nach oben verfahren werden.

Insbesondere kann dabei zum Verfahren der ersten Führungselemente bzw. Rollelemente auf der Kulissenführung die Transporttasche an der Transportvorrichtung hängend in Transportrichtung weiterbewegt werden.

Dabei können die ersten Führungselemente bzw. Rollelemente beim Erreichen der Entleerungslage der Transporttasche einrastend in eine Rastvertiefung an der Kulissenführung einfahren.

Insbesondere können Mittel zum Entleeren der Transporttasche vorgesehen sein.

Wenn in der Vorderwand der Transporttasche mindestens eine Eingriffsöffnung vorgesehen ist, durch welche hindurch ein Zugriff auf den im Inneren der Transporttasche befindlichen Transportraum ermöglicht wird und die Mittel zum Einschieben des Transportgutes Rollenbahnen umfassen, kann zum leichteren Entladen des Transportgutes aus der Transporttasche die Transporttasche derart auf Rollenbahnen abgesenkt werden, dass diese mit ihren Rollen durch die Eingriffsöffnungen in den Transportraum hineinragen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer Seitenansicht eine beispielhafte Transportvorrichtung, wie sie zum Transport einer erfindungsgemässen Tasche geeignet ist;
- Fig. 2: die Transportvorrichtung aus Fig. 1 in einer Transportrichtung gesehen;
- Fig. 3: gegen die Transportrichtung gesehen eine Transporttasche gemäss einem Ausführungsbeispiel der Erfindung;
- Fig. 4: in einer perspektivischen Seitenansicht eine Transporttasche gemäss einem anderen Ausführungsbeispiel der Erfindung mit zwei Eingriffsöffnungen in der Vorderwand;
- Fig. 5: in einer zu Fig. 4 vergleichbaren Ansicht eine Transporttasche gemäss einem weiteren Ausführungsbeispiel der Erfindung mit zwei nach oben offenen Eingriffsöffnungen in der Vorderwand;
- Fig. 6: in einer zu Fig. 4 vergleichbaren Ansicht eine Transporttasche gemäss einem anderen Ausführungsbeispiel der Erfindung in Verbindung mit einer Transportvorrichtung;
- Fig. 7: in einer Seitenansicht die mit einem Paket gefüllte erfindungsgemässe Transporttasche;
- Fig. 8: die Transporttasche aus Fig. 7 im leeren Zustand;
- Fig. 9: in einer zu Fig. 4 vergleichbaren Ansicht eine Transporttasche gemäss einem anderen Ausführungsbeispiel der Erfindung mit verkürzter Rückwand;
- Fig. 10: einen ersten Schritt bei einem möglichen Füllvorgang für eine Transporttasche nach der Erfindung;
- Fig. 11: im Anschluss an Fig. 10 einen zweiten Schritt bei einem möglichen Füllvorgang für eine Transporttasche nach der Erfindung;
- Fig. 12: im Anschluss an Fig. 11 einen dritten Schritt bei einem möglichen Füllvorgang für eine Transporttasche nach der Erfindung;
- Fig. 13: einen ersten Schritt bei einem möglichen Entleerungsvorgang für eine Transporttasche nach der Erfindung; und
- Fig. 14: im Anschluss an Fig. 13 einen zweiten Schritt bei einem möglichen Entleerungsvorgang für eine Transporttasche nach der Erfindung.

### WEGE ZUR AUSFÜHRUNG DER ERFINDUNG

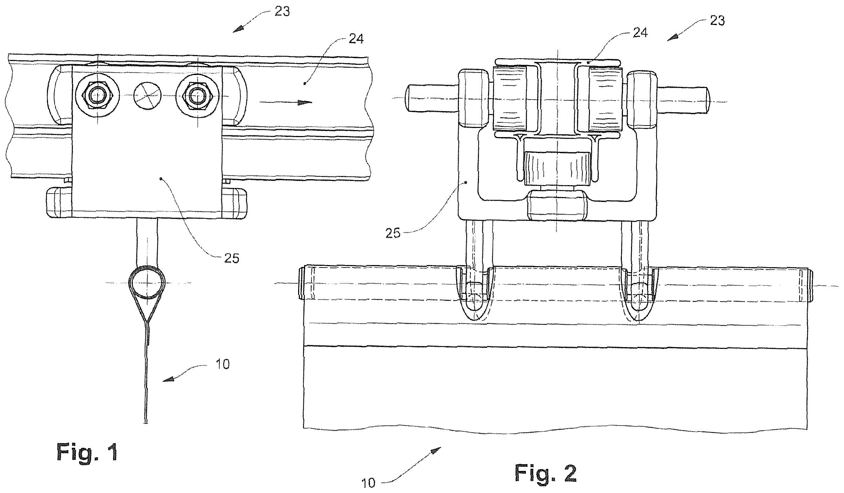

Fig. 1 zeigt in einer Seitenansicht eine beispielhafte Transportvorrichtung 23 in Form eines Hängeförderers, wie sie zum Transport einer erfindungsgemässen Transporttasche 10 geeignet ist; Fig. 2 zeigt die Transportvorrichtung 23 aus Fig. 1 in einer Richtung entgegengesetzt der Transportrichtung (Pfeil in Fig. 1) gesehen. Die Transportvorrichtung 23 umfasst Laufwagen 25, die mittels Rollen an einer Laufschiene 24 verfahrbar gelagert sind und die innenliegende Laufschiene 24 aussen umgreifen. Eine derartige Transportvorrichtung ist z.B. aus den Druckschriften WO 2016/030275 A1 und WO 2016/030274 A1 bekannt. Die Transporttasche 10 ist in den beiden Figuren nur angedeutet.

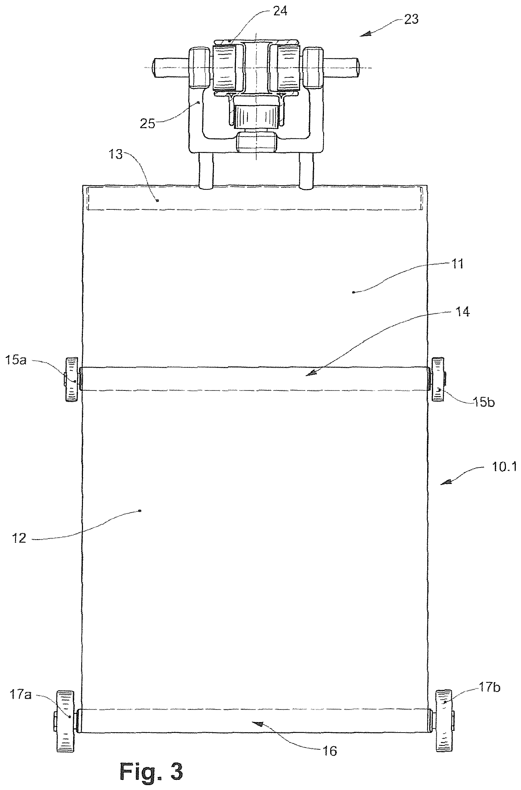

Fig. 3 zeigt ein erstes Ausführungsbeispiel einer Transporttasche nach der Erfindung. Die dargestellter Transporttasche 10.1 weist eine (erhöhte) Rückwand 11 und eine Vorderwand 12 auf, die beide quer zur Schienen- bzw. Förderrichtung orientiert sind. Die Begriffe "Vorderwand" und "Rückwand" beziehen sich auf die Transportrichtung, wobei die Vorderwand 12 in Transportrichtung vor der Rückwand 11 angeordnet ist. In die Rückwand 11 ist im oberen Bereich ein Verbindungsmittel 13 eingelassen, das es ermöglicht, die Transporttasche 10.1 hängend an einem Laufwagen 25 der Transportvorrichtung dauerhaft oder abnehmbar zu befestigen. In Beispiel der Fig. 3 umfasst das Verbindungsmittel 13 eine über die ganze Breite der Rückwand 11 laufende Querstange, von der im mittleren Bereich zwei vertikale Verbindungselemente zum Laufwagen 25 abgehen.

Das eigentliche Transportvolumen der Transporttasche 10.1 entspricht in der Höhe der Höhe der Vorderwand 12 und erstreckt sich zwischen einem oberen Taschenabschluss 14 und einem unteren Taschenabschluss 16. Im unteren Taschenabschluss 16 sind an der Unterkante der Rückwand 11 seitlich gegenüberliegend zwei Führungselemente in Form von Rollelementen 17a und 17b angeordnet, deren Drehachsen vorzugsweise horizontal und quer zur Transportrichtung orientiert sind. Die Rollelemente 17a und 17b können insbesondere Rollen oder Räder sein.

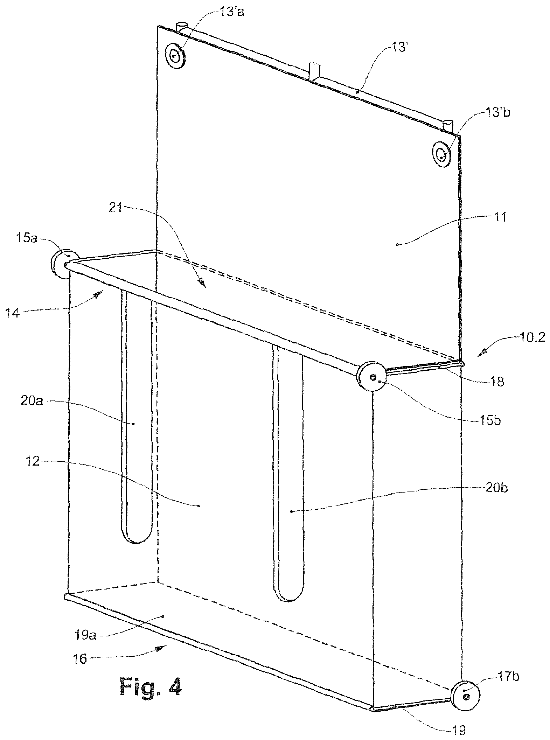

Im oberen Taschenabschluss 14 sind an der Oberkante der Vorderwand 12 seitlich gegenüberliegend zwei Rollelemente 15a und 15b angeordnet, deren Drehachsen ebenfalls vorzugsweise horizontal und quer zur Transportrichtung orientiert sind und die zur Führung der Transporttasche und/oder zum Einwirken auf die Transporttasche dienen. Auch die Rollelemente 1 5a und 1 5b können insbesondere Rollen oder Räder sein. Die Anordnung der Rollelemente 1 5a, 1 5b und 17a, 17b ist gleich im Ausführungsbeispiel der Fig. 4.

Damit die Transporttasche 10.1 zum Befüllen und Entleeren in der beabsichtigten, später noch näher erläuterten Weise einfach und funktionssicher in eine bestimmte Lage gebracht und dort gehalten werden kann, ist es zweckmässig, bezüglich der Vorder- und Rückwand 12 bzw. 11 und deren Verbindung untereinander gewisse Bedingungen einzuhalten. So kann die Rückwand 11 z.B. formstabil ausgebildet sein. "Formstabil" bedeutet in diesem Zusammenhang, dass die Rückwand 11 auch bei einer Veränderung der Lage der Transporttasche ihren plattenartigen Wandcharakter beibehält. Dies kann beispielsweise dadurch erreicht werden, dass die Rückwand als formstabile Platte zumindest teilweise aus Kunststoff, Metall oder einem Holzwerkstoff ausgebildet ist. Dies kann insbesondere dann der Fall sein, wenn die Rückwand 11 und die Vorderwand 12 Abschnitte einer einstückigen Hohlkammerplatte sind, die vorzugsweise aus Kunststoff, insbesondere aus Polypropylen (PP) besteht, und die zur Ausbildung von Rückwand 11, Vorderwand 12 und dazwischen liegendem Boden zweimal in geeignetem Abstand quer zur Längsrichtung der Hohlkammern geknickt ist, derart, dass bei der hängenden Transporttasche die länglichen Hohlkammern in der Rückwand 11 und Vorwand 12 vertikal verlaufen.

Es ist aber auch denkbar, dass die Rückwand lediglich einen formstabilen Rahmen aufweist, der mit einem Gewebe oder einer einfachen oder laminierten Folie bespannt ist. Dasselbe gilt ebenso für die Vorderwand 12 der Transporttasche 10.1.

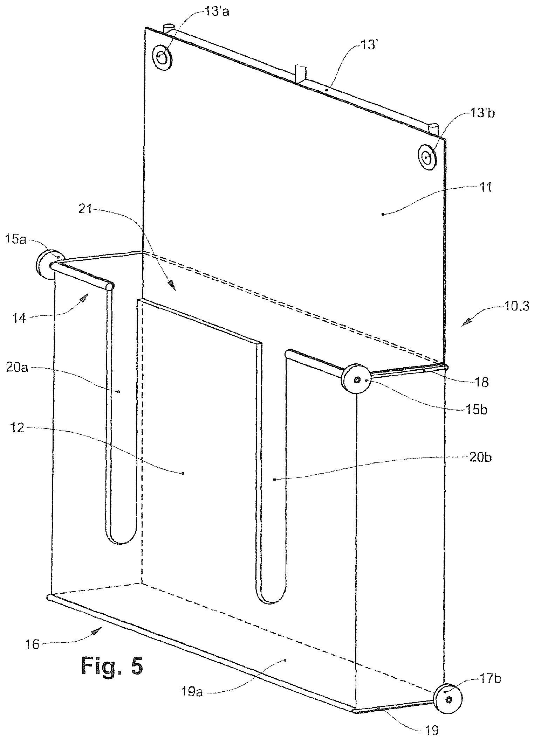

Vorderwand 12 und Rückwand 11 sollen nun im Bereich des oberen Taschenabschlusses 14 und im Bereich des unteren Taschenabschlusses 16 beweglich miteinander verbunden sein. Wie am in Fig. 4 dargestellten Ausführungsbeispiel der Transporttasche 10.2 wegen der perspektivischen Darstellung besser zu erkennen ist, kann zur beweglichen Verbindung zwischen der Vorderwand 12 und der Rückwand 11 am oberen Taschenabschluss 14 ein formstabiler, vorzugsweise rechteckiger Bügel 18 vorgesehen sein, welcher sowohl an der Vorderwand 12 als auch an der Rückwand 11 verschwenkbar gelagert ist. Der Bügel 18 kann geschlossen ausgebildet sei. Er kann aber auch offen sein, wenn am oberen Rand der Tasche Unterbrüche vorgesehen sind (siehe Fig. 5).

Desgleichen kann zur beweglichen Verbindung zwischen der Vorderwand 12 und der Rückwand 11 am unteren Taschenabschluss 16 ein formstabiler, vorzugsweise rechteckiger Rahmen 19 oder Bügel und/oder ein entsprechender formstabiler Boden 19a vorgesehen werden, welche sowohl an der Vorderwand 12 als auch an der Rückwand 11 verschwenkbar gelagert sind. Während der Bügel 18 zum Befüllen und Entleeren der Transporttasche 10.1 bzw. 10.2 durch den oberen Taschenabschluss 14 leer ist, kann der Rahmen 19, insbesondere wenn kein separater Boden 1 9a vorgesehen ist, mit einem Gewebe oder einer einfachen oder laminierten Folie bespannt sein. Wenn Vorderwand 12 und/oder Rückwand 11 in sich formstabil sind, können anstelle eines geschlossenen Bügels 18 und Rahmens 19 oben und unten auch nur seitlich angeordnete Schwenkarme als Verbindung zwischen den Wänden vorgesehen werden. Entsprechende Schwenklager oder Scharniere sind in den Figuren allerdings nicht dargestellt.

Die Transporttasche 10.2 der Fig. 4 weist gegenüber der Transporttasche 10.1 der Fig. 3 einige Abweichungen auf: Zum einen ist ein Verbindungsmittel 13' vorgesehen, welches auch eine Querstange aufweist, aber lediglich an zwei randseitigen Punkten mittels Befestigungselementen 13'a und 13'b (Nieten, Schraubverbindungen mit Unterlegscheiben etc.) an der Rückwand 11 befestigt ist. Zum anderen ist die Vorderwand 11 formstabil, insbesondere als Platte, ausgeführt und weist zwei vertikale Eingriffsöffnungen 20a und 20b in Form breiter Schlitze auf, durch die hindurch zu bestimmten Zwecken, auf die später noch näher eingegangen wird, von aussen auf den Innen- oder Transportraum 21 der Transporttasche 10.2 zugegriffen werden kann. Im Fall der Fig. 4 enden die Eingriffsöffnungen 20a und 20b am oberen (geschlossenen) Bügel 18 der Transporttasche 10.2. Sie können aber auch, wie bei der Transporttasche 10.3 der Fig. 5, durchgehend ausgebildet sein, was in bestimmten Fällen den Eingriff erleichtert. Der Bügel 18' ist in diesem Fall unterbrochen ausgeführt.

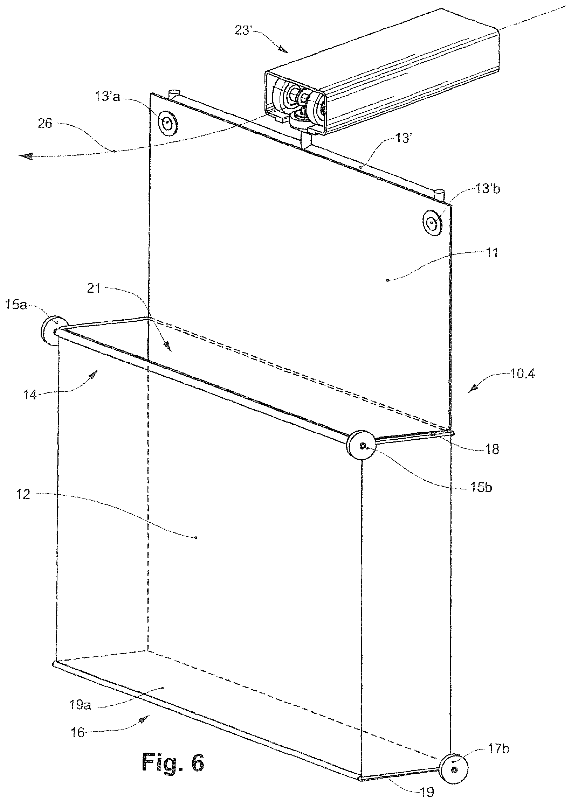

In Fig. 6 ist für die Transporttasche 10.4 die Orientierung der Tasche in Bezug auf die Transportrichtung 26 in der Transportvorrichtung 23' gut erkennbar. Die Transportvorrichtung 23' hat in diesem Fall Laufwagen oder Laufelemente, die im Inneren einer Laufschiene verfahrbar gelagert sind. Derartige Vorrichtungen sind z.B. aus der EP 1 693 322 A1 bekannt. In diesem Zusammenhang sei darauf hingewiesen, dass die Laufwagen oder Laufelemente der Transportvorrichtungen bzw. Hängeförderer 23, 23' einzeln verfahrbar ausgebildet, aber auch zu mehreren in Laufrichtung untereinander verbunden sein können.

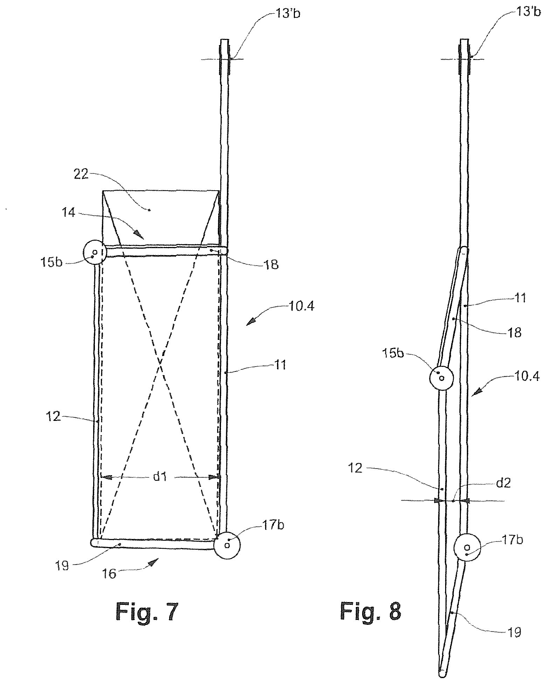

Die Fig. 7 und 8 zeigen in einer Seitenansicht, wie eine Transporttasche 10.4 gemäss Fig. 6 ihre Gestalt ändert, je nachdem, ob die Tasche gefüllt (Fig. 7) oder leer ist (Fig. 8). Im gefüllten Zustand, wenn die Transportasche 10.4 ein Transportgut 22, z.B. in Form eines quaderförmigen Pakets, aufgenommen hat, nimmt die Vorderwand 12 gegenüber der Rückwand 11 durch entsprechendes Verschwenken eine Position ein, in der sie - je nach Dicke des Transportgutes 22 - einen mehr oder weniger grossen Abstand d1 zur Rückwand 11 hat. Dieser Abstand d 1 wird maximal, wenn Bügel 18 bzw. Rahmen 19 horizontal liegen. Im leeren Zustand (Fig. 8) klappt die Vorderwand 12 durch Verschwenken von Bügel 18 und Rahmen 19 aufgrund der Schwerkraft in einer Parallelogrammkonfiguration nach unten und nimmt so, wenn die leeren Taschen in einem Lager oder einer Parkposition für weitere Transportaufgaben vorgehalten werden, wenig Platz ein. Der Abstand zwischen der Vorderwand 12 und der Rückwand 11 nimmt dann mit d2 seinen Minimalwert ein.

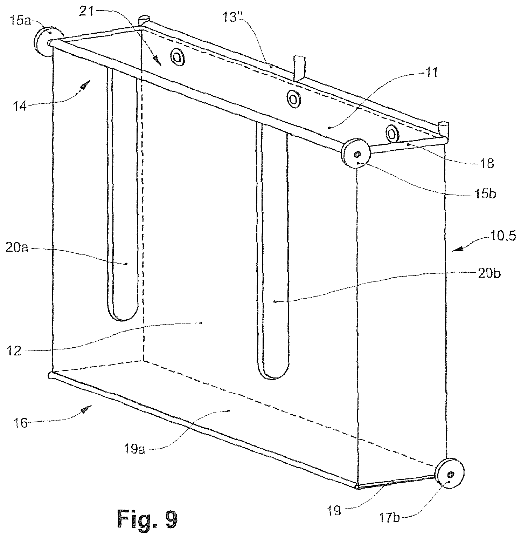

Während bei den bisherigen Ausführungsbeispielen der Transporttaschen nach der Erfindung die Rückwand 11 regelmässig die Vorderwand 12 beträchtlich überragte, endet beim Ausführungsbeispiel gemäss Fig. 9 die Rückwand 11 der Transporttasche 10.5 auf der gleichen Höhe wie die Vorderwand 12. Auch das Verbindungsmittel 13" ist in diesem Fall etwas verändert, indem es drei über die Breite verteilte Befestigungselemente aufweist. Selbstverständlich können, insbesondere bei höheren Transportlasten, weitere Befestigungspunkte und Befestigungselemente vorgesehen werden.

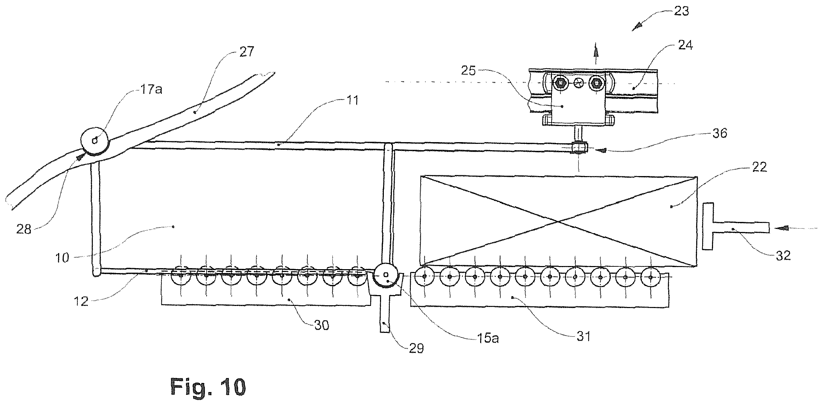

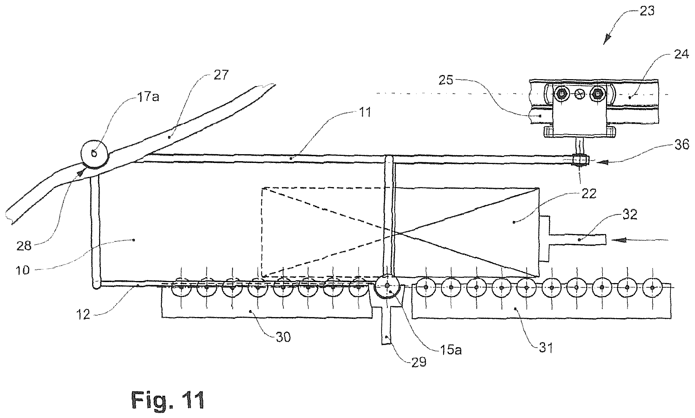

In den Fig. 10 bis 12 ist nun ein Ausführungsbeispiel für das erfindungsgemässe Verfahren zum Befüllen einer Transporttasche 10 der beschriebenen Art schematisch vereinfacht in mehreren Schritten wiedergegeben. Im ersten Schritt gemäss Fig. 10 wird die Transporttasche von der hängenden vertikalen Lage in eine Einfülllage verkippt, indem die Tasche mit den Rollelementen 1 7a und 17b am unteren Ende der Rückwand 11 auf einer ansteigenden Kulissenführung 27 gegenüber der Transportvorrichtung 23 nach oben verfahren wird, bis die Rollelemente 17a und 17b in entsprechende Rastvertiefungen 28 an der Kulissenführung 27 einfahren und die Transporttasche 10 in dieser Position einrasten, wenn gleichzeitig der weitere Transport unterbrochen wird. Das Verkippen wird z.B. ermöglicht durch eine Gelenkverbindung 36 zwischen dem Verbindungsmittel und dem Laufwagen 25.

In dieser Konfiguration kann - wenn gemäss Fig. 4 oder 5 entsprechende Eingriffsöffnungen 20a und 20b in der unten liegenden Vorderwand 11 vorhanden sind - eine entsprechend konfigurierte Rollenbahn 30 mit ihren Rollen durch die Eingriffsöffnungen 20a und 20b in das Innere der Tasche eintauchend herangeführt werden, um ein leicht auf den Rollen gleitendes Einschieben eines Transportgutes 22 zu ermöglichen. Damit bei dieser Konfiguration auch die Vorderwand 12 stabil in ihrer Position verbleibt, kann zuvor eine Fixiervorrichtung 29 die Vorderwand 12 an ihren Rollelementen 1 5a und 1 5b fixieren.

Das Transportgut 22 kann mittels einer weiteren Rollenbahn 31 z.B. horizontal herangeführt (Fig. 10) und dann, z.B. mittels eines Schiebemechanismus 32, in die liegende, geöffnete Transporttasche 10 eingeschoben werden. Es ist aber auch denkbar, zum Einführen motorisch angetriebene Rollen in den Rollenbahnen 30 und /oder 31 vorzusehen.

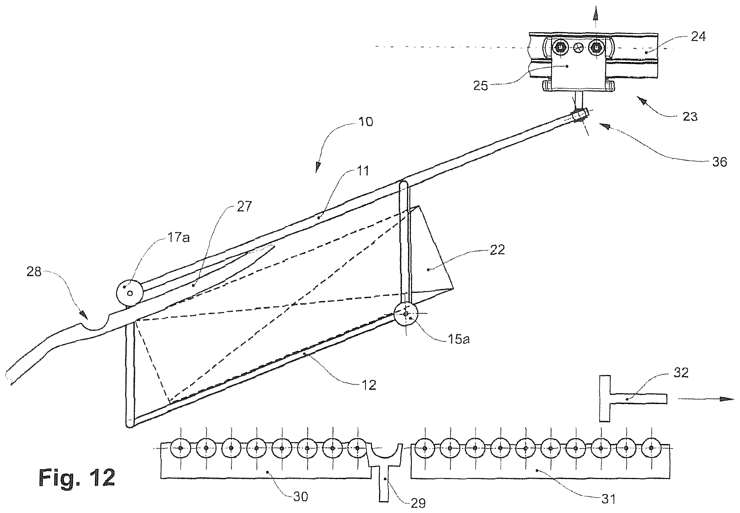

Ist das Transportgut 22 von der Transporttasche 10 vollständig aufgenommen - wobei es oben durchaus aus der Tasche herausstehen kann - wird die Transporttasche gemäss Fig. 12 von den Rollenbahnen weg wieder in die hängende vertikale Lage gebracht, indem z.B. der Schiebemechanismus 32 zurückgezogen, die Transportvorrichtung 23 nach oben bewegt und gleichzeitig die Tragetasche 10 auf der Führungskulisse 27 nach oben verfahren und von der Rollenbahn 30 abgehoben wird.

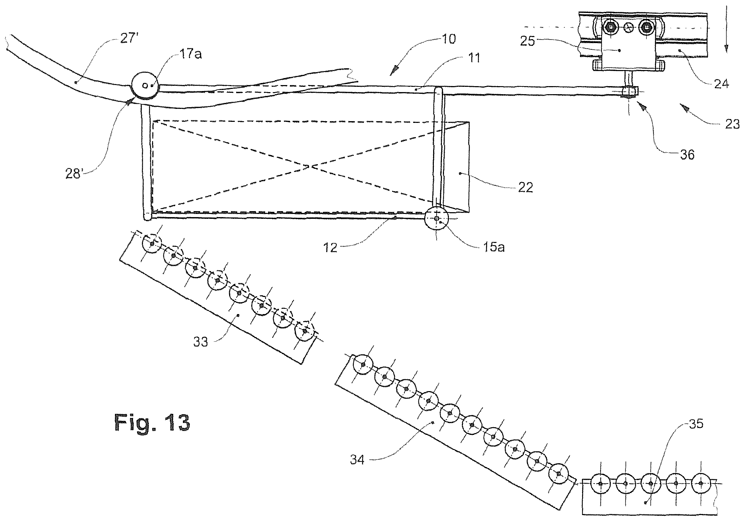

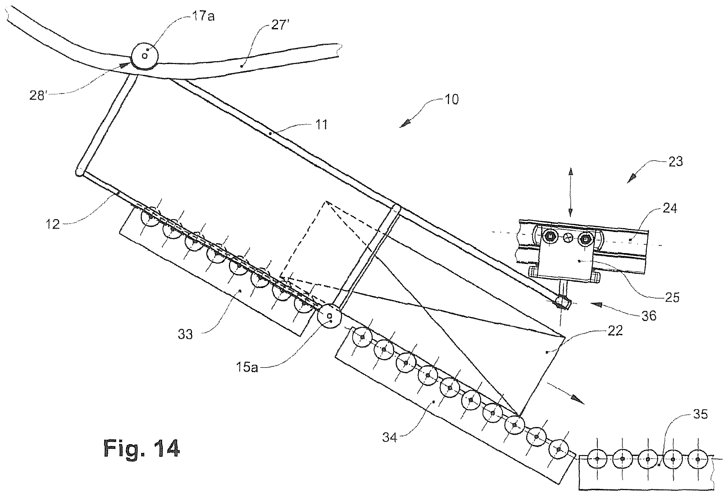

Zum Entleeren der Transporttasche wird gemäss Fig. 13 und 14 die an der Transportvorrichtung 23 hängende, gefüllte Transporttasche 10 von der frei hängenden vertikalen Lage durch Verschwenken der Rückwand 11 zum Erreichen einer Entleerungslage so weit in Richtung auf eine horizontale Lage, bei der sich die Rückwand 11 oberhalb der Vorderwand 12 befindet, bewegt, dass das in der Transporttasche 10 befindliche Transportgut 22 z.B. schräg nach unten aus der Transporttasche 10 herausbefördert werden kann (Fig. 14). Dazu werden die Rollelemente 1 7a und 17b der Rückwand 11 auf einer Kulissenführung 27' relativ zur Transportvorrichtung 23 nach oben verfahren, wobei die Transporttasche 10 an der Transportvorrichtung 23 hängend in Transportrichtung weiterbewegt wird. Die Rollelemente 17a, 17b laufen dabei beim Erreichen der für das Entleeren der Transporttasche 10 vorgesehenen Entleerungslage einrastend in eine Rastvertiefung 28' an der Kulissenführung 27' ein (Fig. 13). Anschliessend wird durch Absenken der Transportvorrichtung 23 die Transporttasche 10 mit der oberen Öffnung weiter nach unten verkippt und dabei gleichzeitig durch die Eingriffsöffnungen 20a und 20b in Eingriff mit einer ersten Rollenbahn einer Reihe von Rollenbahnen 33, 34 und 35 gebracht, auf denen das Transportgut 22 dann aus der Transporttasche 10 heraus rollen und zu einem Ausgabeort weitertransportiert werden kann.

## Patentansprüche

1. Transporttasche (10; 10.1 -10.5) für den hängenden Transport eines Transportgutes (22) mittels einer sich in einer Transportrichtung (26) erstreckenden Transportvorrichtung (23, 23'), welche Transporttasche (10; 10.1 -10.5) eine quer zur Transportrichtung (26) ausgerichtete Rückwand (11) und eine quer zur Transportrichtung (26) ausgerichtete Vorderwand (12) aufweist, die an einem oberen Taschenabschluss (14) und einem unteren Taschenabschluss (16) untereinander beweglich verbunden sind, derart, dass die Vorderwand (12) relativ zur Rückwand (11) zwischen einer Füllposition, in welcher sie zur Rückwand (11) einen ersten Abstand (d1) hat, und einer Leerposition, in welcher sie zur Rückwand (11) einen zweiten Abstand (d2) hat, welcher kleiner ist als der erste Abstand (d1), und welche Transporttasche (10; 10.1-10.5) mittels eines an der Rückwand (11) oben angebrachten Verbindungsmittels (13, 13', 13") mit der Transportvorrichtung (23, 23') hängend verbindbar ist, **dadurch gekennzeichnet, dass** die Rückwand (11) im Bereich des unteren Taschenabschlusses (16) seitlich angeordnete erste lokalisierte Führungselemente (17a, 17b) zum Führen der Transporttasche (10; 10.1-10.5) aufweist.

2. Transporttasche nach Anspruch 1, **dadurch gekennzeichnet, dass** die ersten Führungselemente als erste Rollelemente (17a, 17b) ausgebildet sind.

3. Transporttasche nach Anspruch 2, **dadurch gekennzeichnet, dass** die Achsen der ersten Rollelemente (17a, 17b) quer zur Transportrichtung (26) orientiert sind.

4. Transporttasche nach einem der Ansprüche 1 bis 3, **dadurch gekennzeichnet, dass** die Rückwand (11) einen Rahmen, der vorzugsweise formstabil ist, aufweist, wobei vorzugsweise zur beweglichen Verbindung zwischen der Vorderwand (12) und der Rückwand (11) am oberen Taschenabschluss (14) ein formstabiler Bügel (18) vorgesehen ist, welcher sowohl an der Vorderwand (12) als auch an der Rückwand (11) verschwenkbar gelagert ist.

5. Transporttasche nach einem der Ansprüche 1 bis 4, **dadurch gekennzeichnet, dass** die Vorderwand (12) im Bereich des oberen Taschenabschlusses (14) seitlich angeordnete zweite Rollelemente (15a, 15b) zum Führen der und/oder Einwirken auf die Transporttasche (10; 10.1-10.5) aufweist, und vorzugsweise die Achsen der zweiten Rollelemente (15a, 1 5b) quer zur Transportrichtung (26) orientiert sind.

6. Transporttasche nach einem der Ansprüche 1 bis 5, **dadurch gekennzeichnet, dass** in der Vorderwand (12) mindestens eine Eingriffsöffnung (20a, 20b) vorgesehen ist, durch welche hindurch ein Zugriff auf den im Inneren der Transporttasche (10; 10.1 -10.5) befindlichen Transportraum (21) ermöglicht wird.

7. Transporttasche nach einem der Ansprüche 1 bis 6, **dadurch gekennzeichnet, dass** die Transporttasche (10; 10.1 - 10.5) an den Seiten offen ausgebildet ist, wobei vorzugsweise die Transporttasche (10; 10.1 -10.5) an den Seiten zumindest teilweise geschlossen ausgebildet ist.

8. Transporttasche nach einem der Ansprüche 1-3, **dadurch gekennzeichnet, dass** die Rückwand (11) formstabil ausgebildet ist und die Transporttasche (10; 10.1-10.5) vorzugsweise rahmenlos ausgebildet ist.

9. Transporttasche nach Anspruch 8, **dadurch gekennzeichnet, dass** die Rückwand (11) und Vorderwand (12) Abschnitte einer einstückigen Hohlkammerplatte, die vorzugsweise aus Kunststoff, insbesondere aus Polypropylen (PP), besteht, sind, welche zur Ausbildung von Rückwand (11), Vorderwand (12) und dazwischen liegendem Boden zweimal in geeignetem Abstand quer zur Längsrichtung der Hohlkammern geknickt ist, derart dass bei der hängenden Transporttasche die Hohlkammern in der Rückwand (11) und Vorwand (12) vertikal verlaufen.

10. Verfahren zum Befüllen der Transporttasche nach einem der Ansprüche 1 bis 9, **dadurch gekennzeichnet, dass** die an der Transportvorrichtung (23, 23') hängende Transporttasche (10; 10.1-10.5) zum Öffnen von der frei hängenden vertikalen Lage durch Verschwenken der Rückwand (11) zum Erreichen einer Einfülllage so weit in Richtung auf eine horizontale Lage, bei der sich die Rückwand (11) oberhalb der Vorderwand (12) befindet, bewegt wird, dass der sich einstellende Abstand zwischen Rückwand (11) und Vorderwand (12) für das Einfüllen eines Transportgutes (22) ausreichend gross ist.

11. Verfahren nach Anspruch 10, **dadurch gekennzeichnet, dass** zum Verschwenken der Transporttasche (10; 10.1-10.5) die ersten Führungselemente bzw. Rollelemente (17a, 17b) der Rückwand (11) auf einer Kulissenführung (27) relativ zur Transportvorrichtung (23, 23') nach oben verfahren werden, wobei vorzugsweise die ersten Führungselemente bzw. Rollelemente (17a, 17b) beim Erreichen der für das Füllen der Transporttasche (10; 10.1 - 10.5) vorgesehenen Einfülllage einrastend in eine Rastvertiefung (28) an der Kulissenführung (27) einfahren.

12. Verfahren nach Anspruch 11, **dadurch gekennzeichnet, dass** die Vorderwand (12) im Bereich des oberen Taschenabschlusses (14) seitlich angeordnete zweite Rollelemente (15a,b) zur Führung der und/oder zum Einwirken auf die Transporttasche (10; 10.1 - 10.5) aufweist, deren Achsen insbesondere quer zur Transportrichtung (26) orientiert sind, und dass beim Erreichen der für das Füllen der Transporttasche (10; 10.1 -10.5) vorgesehenen Lage die Vorderwand (12) in ihrer Position mittels der zweiten Rollelemente (15a,b) fixiert wird.

13. Verfahren nach Anspruch 10, **dadurch gekennzeichnet, dass** das Transportgut (22) in die in der Einfülllage befindliche Transporttasche (10; 10.1 - 10.5) eingeführt wird, wobei vorzugsweise Mittel (30, 31, 32) zum Einführen des Transportgutes (22) in die Transporttasche (10; 10.1 -10.5) vorgesehen sind, und bevorzugt in der Vorderwand (12) der Transporttasche (10; 10.1 - 10.5) mindestens eine Eingriffsöffnung (20a, 20b) vorgesehen ist, durch welche hindurch ein Zugriff auf den im Inneren der Transporttasche (10; 10.1 -1 0.5) befindlichen Transportraum (21) ermöglicht wird, dass die Mittel zum Einführen des Transportgutes (22) Rollenbahnen (30) umfassen, und dass zum leichteren Einführen des Transportgutes (22) in die Transporttasche (10; 10.1-10.5) die Transporttasche (10; 10.1-10.5) derart auf die Rollenbahnen (30) abgesenkt wird, dass diese mit ihren Rollen durch die mindestens eine Eingriffsöffnung (20a, 20b) in den Transportraum (21) hineinragen.

14. Verfahren zum Entleeren der Transporttasche nach einem der Ansprüche 1 bis 9, **dadurch gekennzeichnet, dass** die an der Transportvorrichtung (23, 23') hängende Transporttasche (10; 10.1 - 10.5) von der frei hängenden vertikalen Lage durch Verschwenken der Rückwand (11) zum Erreichen einer Entleerungslage so weit in Richtung auf eine horizontale Lage oder darüber hinaus, bei der sich die Rückwand (11) oberhalb der Vorderwand (12) befindet, bewegt wird, dass das in der Transporttasche (10; 10.1-10.5) befindliche Transportgut (22) aus der Transporttasche (10; 10.1-10.5) herausbefördert werden kann, wobei vorzugsweise zum Verschwenken der Transporttasche (10; 10.1 -10.5) die ersten Führungselemente bzw. Rollelemente (17a, 17b) der Rückwand (11) auf einer Kulissenführung (27') relativ zur Transportvorrichtung (23, 23') nach oben verfahren werden.

15. Verfahren nach Anspruch 14, **dadurch gekennzeichnet, dass** zum Verfahren der ersten Führungselemente bzw. Rollelemente (17a, 17b) auf der Kulissenführung (27') die Transporttasche (10; 10.1-10.5) an der Transportvorrichtung (23, 23') hängend in Transportrichtung (26) weiterbewegt wird.

16. Verfahren nach Anspruch 14, **dadurch gekennzeichnet, dass** die ersten Führungselemente bzw. Rollelemente (17a, 17b) beim Erreichen der Entleerungslage der Transporttasche (10; 10.1-10.5) einrastend in eine Rastvertiefung (28') an der Kulissenführung (27') einfahren.

17. Verfahren nach Anspruch 14 **dadurch gekennzeichnet, dass** Mittel (30) zum Entleeren der Transporttasche (10; 10.1 -10.5) vorgesehen sind, wobei vorzugsweise in der Vorderwand (12) der Transporttasche (10; 10.1-10.5) mindestens eine Eingriffsöffnung (20a, 20b) vorgesehen ist, durch welche hindurch ein Zugriff auf den im Inneren der Transporttasche (10; 10.1-10.5) befindlichen Transportraum (21) ermöglicht wird, dass die Mittel zum Entleeren der Transporttasche (10; 10.1 - 10.5) Rollenbahnen (30) umfassen, und dass zum leichteren Entladen des Transportgutes (22) aus der Transporttasche (10; 10.1 - 10.5) die Transporttasche (10; 10.1 -10.5) derart auf die Rollenbahnen (30) abgesenkt wird, dass diese mit ihren Rollen durch die Eingriffsöffnungen (20a, 20b) in den Transportraum (21) hineinragen.

## Claims

1. Transport bag (10; 10.1-10.5) for transport of an item for transport (22) in a hanging manner by means of a transport device (23; 23') extending in a transport direction (26), which transport bag (10; 10.1-10.5) has a rear wall (11) which is oriented transversely to the transport direction (26) and has a front wall (12) which is oriented transversely to the transport direction (26), which walls are connected movably with respect to one another at an upper bag termination (14) and a lower bag termination (16) such that the front wall (12) relative to the rear wall (11) between a full position, in which it is at a first distance (d1) from the rear wall (11), and an empty position, in which it is at a second distance (d2) from the rear wall (11), which second distance is smaller than the first distance (d1), and which transport bag (10; 10.1-10.5) can be connected in a hanging manner to the transport device (23; 23') by means of a connecting means (13; 13'; 13") which is attached to the top of the rear wall (11), **characterized in that**, in the region of the lower bag termination (16), the rear wall (11) has laterally arranged first localized guide elements (17a, 17b) for guidance of the transport bag (10; 10.1-10.5).

2. Transport bag according to Claim 1, **characterized in that** the first guide elements are designed as first rolling elements (17a, 17b).

3. Transport bag according to Claim 2, **characterized in that** the axes of the first rolling elements (17a, 17b) are oriented transversely to the transport direction (26).

4. Transport bag according to one of Claims 1 to 3, **characterized in that** the rear wall (11) has a frame, which is preferably dimensionally stable, wherein, preferably, for the movable connection between the front wall (12) and the rear wall (11), provision is made at the upper bag termination (14) of a dimensionally stable bar (18), which is mounted pivotably both at the front wall (12) and at the rear wall (11).

5. Transport bag according to one of Claims 1 to 4, **characterized in that**, in the region of the upper bag termination (14), the front wall (12) has laterally arranged second rolling elements (15a, 15b) for guidance of and/or action on the transport bag (10; 10.1-10.5), and preferably the axes of the second rolling elements (15a, 15b) are oriented transversely to the transport direction (26).

6. Transport bag according to one of Claims 1 to 5, **characterized in that**, in the front wall (12), at least one engagement opening (20a, 20b) is provided, through which access to the transport space (21) arranged in the interior of the transport bag (10; 10.1-10.5) is made possible.

7. Transport bag according to one of Claims 1 to 6, **characterized in that** the transport bag (10; 10.1-10.5) is designed such that it is open at the sides, wherein, preferably, the transport bag (10; 10.1-10.5) is designed such that it is at least partially closed at the sides.

8. Transport bag according to one of Claims 1-3, **characterized in that** the rear wall (11) is of dimensionally stable design, and the transport bag (10; 10.1-10.5) is preferably designed without a frame.

9. Transport bag according to Claim 8, **characterized in that** the rear wall (11) and the front wall (12) are sections of a one-piece hollow-chamber plate, which preferably consists of plastic, in particular of polypropylene (PP), and which, for forming rear wall (11), front wall (12) and base situated there between, is bent twice with a suitable spacing transverse to the longitudinal direction of the hollow chambers such that, with the transport bag in a hanging state, the hollow chambers in the rear wall (11) and the front wall (12) extend vertically.

10. Method for filling the transport bag according to one of Claims 1 to 9, **characterized in that** the transport bag (10; 10.1-10.5) hanging on the transport device (23; 23'), for opening, is, for the purpose of reaching a filling position, moved from the freely hanging vertical position, by way of pivoting of the rear wall (11), to such an extent in the direction of a horizontal position, in which the rear wall (11) is situated above the front wall (12), that the self-adjusting spacing between rear wall (11) and front wall (12) is sufficiently large for the filling of an item for transport (22).

11. Method according to Claim 10, **characterized in that**, for pivoting the transport bag (10; 10.1-10.5), the first guide elements or rolling elements (17a, 17b) of the rear wall (11) are moved on a slotted guide (27) in an upward direction relative to the transport device (23, 23'), wherein, preferably, when the filling position intended for the filling of the transport bag (10; 10.1-10.5) is reached, the first guide elements or rolling elements (17a, 17b) move into a latching depression (28) in the slotted guide (27) in a latching manner.

12. Method according to Claim 11, **characterized in that**, in the region of the upper bag termination (14), the front wall (12) has laterally arranged second rolling elements (15a,b) for guidance of and/or action on the transport bag (10; 10.1-10.5), the axes of which are oriented in particular transversely to the transport direction (26), and **in that**, when the position intended for the filling of the transport bag (10; 10.1-10.5) is reached, the front wall (12) is fixed in its position by means of the second rolling elements (15a,b).

13. Method according to Claim 10, **characterized in that** the item for transport (22) is introduced into the transport bag (10; 10.1-10.5) which is in the filling position, wherein, preferably, provision is made of means (30, 31, 32) for introduction of the item for transport (22) into the transport bag (10; 10.1-10.5), and, preferably, in the front wall (12) of the transport bag (10; 10.1-10.5), provision is made of at least one engagement opening (20a, 20b), through which access to the transport space (21) situated in the interior of the transport bag (10; 10.1-10.5) is made possible, **in that** the means for introduction of the item for transport (22) comprise roller tracks (30), and **in that**, for the purpose of simpler introduction of the item for transport (22) into the transport bag (10; 10.1-10.5), the transport bag (10; 10.1-10.5) is lowered onto the roller tracks (30) such that the latter project with their rollers into the transport space (21) through the at least one engagement opening (20a, 20b).

14. Method for emptying the transport bag according to one of Claims 1 to 9, **characterized in that** the transport bag (10; 10.1-10.5) hanging on the transport device (23; 23') is, for the purpose of reaching an emptying position, moved from the freely hanging vertical position, by way of pivoting of the rear wall (11), to such an extent in the direction of a horizontal position or beyond said horizontal position, in which the rear wall (11) is situated above the front wall (12), that the item for transport (22) situated in the transport bag (10; 10.1-10.5) can be conveyed out of the transport bag (10; 10.1-10.5), wherein, preferably, for pivoting the transport bag (10; 10.1-10.5), the first guide elements or rolling elements (17a, 17b) of the rear wall (11) are moved on a slotted guide (27') in an upward direction relative to the transport device (23, 23').

15. Method according to Claim 14, **characterized in that**, for moving the first guide elements or rolling elements (17a, 17b) on the slotted guide (27'), the transport bag (10; 10.1-10.5) is moved onward in the transport direction (23, 23') in a manner hanging on the transport device (26).

16. Method according to Claim 14, **characterized in that**, when the emptying position of the transport bag (10; 10.1-10.5) is reached, the first guide elements or rolling elements (17a, 17b) move into a latching depression (28') in the slotted guide (27') in a latching manner.

17. Method according to Claim 14, **characterized in that** provision is made of means (30) for emptying of the transport bag (10; 10.1-10.5), wherein, preferably, in the front wall (12) of the transport bag (10; 10.1-10.5), provision is made of at least one engagement opening (20a, 20b), through which access to the transport space (21) situated in the interior of the transport bag (10; 10.1-10.5) is made possible, **in that** the means for emptying of the transport bag (10; 10.1-10.5) comprise roller tracks (30), and **in that**, for the purpose of simpler unloading of the item for transport (22) from the transport bag (10; 10.1-10.5), the transport bag (10; 10.1-10.5) is lowered onto the roller tracks (30) such that the latter project with their rollers into the transport space (21) through the engagement openings (20a, 20b).

## Revendications

1. Sac de transport (10 ; 10.1-10.5) pour le transport suspendu d'un produit à transporter (22) au moyen d'un dispositif de transport (23, 23') s'étendant dans une direction de transport (26), lequel sac de transport (10 ; 10.1-10.5) présente une paroi arrière (11) orientée transversalement à la direction de transport (26) et une paroi avant (12) orientée transversalement à la direction de transport (26), lesquelles sont reliées de manière mobile l'une par rapport à l'autre au niveau d'une terminaison de sac supérieure (14) et d'une terminaison de sac inférieure (16), de telle sorte que la paroi avant (12) soit mobile par rapport à la paroi arrière (11) entre une position de remplissage, dans laquelle elle est située à une première distance (d1) de la paroi arrière (11), et une position de vidage, dans laquelle elle est située à une deuxième distance (d2) de la paroi arrière (11), laquelle deuxième distance est inférieure à la première distance (d1), et lequel sac de transport (10 ; 10.1-10.5) peut être relié de manière suspendue au dispositif de transport (23, 23') par le biais d'un moyen de liaison (13, 13', 13") fixé à la partie supérieure de la paroi arrière (11), **caractérisé en ce que** la paroi arrière (11) présente, dans la région de la terminaison de sac inférieure (16), des premiers éléments de guidage (17a, 17b) localisés disposés latéralement pour le guidage du sac de transport (10 ; 10.1-10.5) .

2. Sac de transport selon la revendication 1, **caractérisé en ce que** les premiers éléments de guidage sont réalisés sous forme de premiers éléments de roulement (17a, 17b).

3. Sac de transport selon la revendication 2, **caractérisé en ce que** les axes des premiers éléments de roulement (17a, 17b) sont orientés transversalement à la direction de transport (26).

4. Sac de transport selon l'une des revendications 1 à 3, **caractérisé en ce que** la paroi arrière (11) présente un cadre, qui est de préférence à stabilité de forme, de préférence un étrier (18) à stabilité de forme étant prévu au niveau de la terminaison de sac supérieure (14) pour la liaison mobile entre la paroi avant (12) et la paroi arrière (11), lequel étrier est monté pivotant à la fois sur la paroi avant (12) et sur la paroi arrière (11).

5. Sac de transport selon l'une des revendications 1 à 4, **caractérisé en ce que** la paroi avant (12) présente, dans la région de la terminaison de sac supérieure (14), des deuxièmes éléments de roulement (15a, 15b) disposés latéralement pour guider le sac de transport (10 ; 10.1-10.5) et/ou agir sur celui-ci, et de préférence les axes des deuxièmes éléments de roulement (15a, 15b) sont orientés transversalement à la direction de transport (26).

6. Sac de transport selon l'une des revendications 1 à 5, **caractérisé en ce qu'**au moins une ouverture d'entrée en prise (20a, 20b) est prévue dans la paroi avant (12), ouverture à travers laquelle un accès à l'espace de transport (21) situé dans l'intérieur du sac de transport (10 ; 10.1-10.5) est rendu possible.

7. Sac de transport selon l'une des revendications 1 à 6, **caractérisé en ce que** le sac de transport (10 ; 10.1 -10.5) est réalisé de manière ouverte sur les côtés, de préférence le sac de transport (10 ; 10.1 -10.5) étant réalisé de manière au moins partiellement fermée sur les côtés.

8. Sac de transport selon l'une des revendications 1 à 3, **caractérisé en ce que** la paroi arrière (11) présente une stabilité de forme et le sac de transport (10 ; 10.1-10.5) est réalisé de préférence sans cadre.

9. Sac de transport selon la revendication 8, **caractérisé en ce que** la paroi arrière (11) et la paroi avant (12) sont des parties d'une plaque à chambres creuses d'un seul tenant qui est constituée de préférence de matière synthétique, en particulier de polypropylène (PP), laquelle est, pour la formation de la paroi arrière (11), de la paroi avant (12) et de la base située entre celles-ci, pliée deux fois à une distance appropriée transversalement à la direction longitudinale des chambres creuses, de telle sorte que, lorsque le sac de transport est suspendu, les chambres creuses dans la paroi arrière (11) et dans la paroi avant (12) s'étendent verticalement.

10. Procédé de remplissage du sac de transport selon l'une des revendications 1 à 9, **caractérisé en ce que** le sac de transport (10 ; 10.1-10.5) suspendu au dispositif de transport (23, 23') est, pour l'ouverture, déplacé à partir de la position verticale librement suspendue par pivotement de la paroi arrière (11) pour atteindre une position de remplissage, dans une mesure telle en direction d'une position horizontale dans laquelle la paroi arrière (11) se situe au-dessus de la paroi avant (12), que la distance résultante entre la paroi arrière (11) et la paroi avant (12) soit suffisamment grande pour le remplissage avec un produit à transporter (22).

11. Procédé selon la revendication 10, **caractérisé en ce que**, pour le pivotement du sac de transport (10 ; 10.1-10.5), les premiers éléments de guidage ou éléments de roulement (17a, 17b) de la paroi arrière (11) sont déplacés vers le haut par rapport au dispositif de transport (23, 23') sur un guide à coulisse (27), de préférence les premiers éléments de guidage ou éléments de roulement (17a, 17b), lorsque la position de remplissage prévue pour le remplissage du sac de transport (10 ; 10.1-10.5) est atteinte, rentrant par encliquetage dans un empreinte d'encliquetage (28) sur le guide à coulisse (27).

12. Procédé selon la revendication 11, **caractérisé en ce que** la paroi avant (12) présente, dans la région de la terminaison de sac supérieure (14), des deuxièmes éléments de roulement (15a,b) disposés latéralement pour guider le sac de transport (10 ; 10.1-10.5) et/ou agir sur celui-ci, éléments de roulement dont les axes sont orientés en particulier transversalement à la direction de transport (26), et **en ce que**, lorsque la position prévue pour le remplissage du sac de transport (10 ; 10.1-10.5) est atteinte, la paroi avant (12) est fixée dans sa position au moyen des deuxièmes éléments de roulement (15a,b).

13. Procédé selon la revendication 10, **caractérisé en ce que** le produit à transporter (22) est introduit dans le sac de transport (10 ; 10.1-10.5) situé dans la position de remplissage, de préférence des moyens (30, 31, 32) d'introduction du produit à transporter (22) dans le sac de transport (10 ; 10.1-10.5) étant prévus, et de préférence au moins une ouverture d'entrée en prise (20a, 20b) étant prévue dans la paroi avant (12) du sac de transport (10 ; 10.1-10.5), ouverture à travers laquelle un accès à l'espace de transport (21) situé dans l'intérieur du sac de transport (10 ; 10.1-10.5) est rendu possible, **en ce que** les moyens d'introduction du produit à transporter (22) comprennent des convoyeurs à rouleaux (30), et **en ce que**, pour l'introduction plus facile du produit à transporter (22) dans le sac de transport (10 ; 10.1-10.5), le sac de transport (10 ; 10.1-10.5) est abaissé sur les convoyeurs à rouleaux (30), de telle sorte que ceux-ci pénètrent par leurs rouleaux dans l'espace de transport (21) à travers l'au moins une ouverture d'entrée en prise (20a, 20b).

14. Procédé de vidage du sac de transport selon l'une des revendications 1 à 9, **caractérisé en ce que** le sac de transport (10 ; 10.1-10.5) suspendu au dispositif de transport (23, 23') est déplacé à partir de la position verticale librement suspendue par pivotement de la paroi arrière (11) pour atteindre une position de vidage, dans une mesure telle en direction d'une position horizontale dans laquelle la paroi arrière (11) se situe au-dessus de la paroi avant (12), ou au-delà de cette position horizontale, que le produit à transporter (22) situé dans le sac de transport (10 ; 10.1-10.5) puisse être transporté hors du sac de transport (10 ; 10.1-10.5), de préférence les premiers éléments de guidage ou éléments de roulement (17a, 17b) de la paroi arrière (11) étant déplacés vers le haut par rapport au dispositif de transport (23, 23') sur un guide à coulisse (27') pour le pivotement du sac de transport (10 ; 10.1-10.5).

15. Procédé selon la revendication 14, **caractérisé en ce que**, pour le déplacement des premiers éléments de guidage ou éléments de roulement (17a, 17b) sur le guide à coulisse (27'), le sac de transport (10 ; 10.1-10.5) est déplacé davantage dans la direction de transport (26) de manière suspendue au dispositif de transport (23, 23').

16. Procédé selon la revendication 14, **caractérisé en ce que** les premiers éléments de guidage ou éléments de roulement (17a, 17b), lorsque la position de vidage du sac de transport (10 ; 10.1-10.5) est atteinte, rentrent par encliquetage dans un empreinte d'encliquetage (28') sur le guide à coulisse (27').

17. Procédé selon la revendication 14, **caractérisé en ce que** des moyens (30) de vidage du sac de transport (10 ; 10.1-10.5) sont prévus, de préférence au moins une ouverture d'entrée en prise (20a, 20b) étant prévue dans la paroi avant (12) du sac de transport (10 ; 10.1-10.5), ouverture à travers laquelle un accès à l'espace de transport (21) situé dans l'intérieur du sac de transport (10 ; 10.1-10.5) est rendu possible, **en ce que** les moyens de vidage du sac de transport (10 ; 10.1-10.5) comprennent des convoyeur à rouleaux (30), et **en ce que**, pour le vidage plus facile du produit à transporter (22) hors du sac de transport (10 ; 10.1-10.5), le sac de transport (10 ; 10.1-10.5) est abaissé sur les convoyeurs à rouleaux (30), de telle sorte que ceux-ci pénètrent par leurs rouleaux dans l'espace de transport (21) à travers les ouvertures d'entrée en prise (20a, 20b).
